# EUROPÄISCHE PATENTANMELDUNG

(11) **EP 1 985 882 A1**
(43) Veröffentlichungstag der Anmeldung: **29.10.2008**
(21) Anmeldenummer: 08005239.2
(22) Anmeldetag: 20.03.2008
(51) Int. Cl.: F16D 35/02

(54) **Flüssigkeitsreibungskupplung für den Antrieb eines Lüfters in einem Kraftfahrzeug**

(30) Priorität: 23.04.2007 DE 102007019088
(71) Anmelder: Behr GmbH & Co. KG, 70469 Stuttgart (DE)
(72) Erfinder: Schultheiss, Gerold, 75173 Pforzheim (DE); Stoklossa, Rudolf, 75417 Mühlacker (DE)

(57) **Zusammenfassung**

Die Erfindung betrifft eine Flüssigkeitsreibungskupplung für den Antrieb eines Lüfters in einem Kraftfahrzeug, wobei die Flüssigkeitsreibungskupplung eine Antriebsscheibe (11) und ein Gehäuse (22), eine Vorratskammer (17) und eine Arbeitskammer (27), eine Eindchtung (15) für die Zuführung von Scherflüssigkeit aus der Vorratskammer (17) in die Arbeitskammer (27) und eine Einrichtung (16) für die Rückführung der Scherflüssigkeit aus der Arbeitskammer (27) in die Vorratskammer (17) aufweist.

Es wird vorgeschlagen, dass die Vorratskammer (17) ringförmig und ein Teil der Vorratskammer (17) als Speicherkammer (19) für die Scherflüssigkeit ausgebildet ist.

## Beschreibung

Die Erfindung betrifft eine Flüssigkeitsreibungskupplung für den Antrieb eines Lüfters in einem Kraftfahrzeug nach dem Oberbegriff des Patentanspruches 1.

Flüssigkeifisreibungskupplungen oder so genannte Visko-Kupplungen sind bekannt und werden bevorzugt als Lüfterkupplung für den Antrieb eines Lüfters in Kraftfahrzeugen eingesetzt. Der Lüfter wird über die Flüssigkeitsreibungskupplung von der Brennkraftmaschine des Kraftfahrzeuges angetrieben, wobei eine temperaturabhängige Steuerung über ein Bi-Metall oder eine elektromagnetische Steuerung in Abhängigkeit von verschiedenen Parametern wie z. B. die Kühlmitteltemperatur bekannt sind. Bei Flüssigkeitsreibungskupplungen wird das Drehmoment in einer Arbeitskammer durch Scheren einer Scherflüssigkeit, beispielsweise ein handelsübliches Silikonöl, übertragen. Das Silikonöl zirkuliert zwischen einer Vorratskammer und der Arbeitskammer über eine geregelte Zuführeinrichtung und eine Rücklaufeinrichtung. Der Füllungsgrad der Arbeitskammer bestimmt das übertragbare Drehmoment.

Das der Erfindung zu Grunde liegende Problem betrifft das so genannte Kaltstartverhalten einer Flüssigkeitsreibungskupplung, d. h. das Zuschaltverhalten der Kupplung nach einem längeren Stillstand der Brennkraftmaschine des Kraftfahrzeuges. In der Stillstandsphase der Kupplung läuft Öl aus der Vorratskammer in die Arbeitskammer, die dadurch teilweise gefüllt wird und zu einem Hochlaufen des Lüfters beim Start der kalten Brennkraftmaschine führt. Ein derartiges Hochlaufen bei kalter Brennkraftmaschine ist unerwünscht, verursacht unerwünschte Geräusche und führt zu unnötigem Energieverbrauch. Insbesondere bei elektrisch angesteuerten Flüssigkeitsreibungskupplungen tritt dieses Phänomen auf, weil bei abgeschaltetem Motor die Elektromagnetspule der Kupplung stromlos und daher die Zuführeinrichtung zwischen Vorratsraum und Arbeitskammer geöffnet ist, was aus failsafe-Gründen erforderlich ist. Man hat bereits Maßnahmen zur Lösung dieses Problems, welches in der englischsprachigen Patentliteratur auch als "moming sickness" bezeichnet wird, vorgeschlagen, z. B. in der EP 1 418 361 A2: In dieser Druckschrift wird für eine elektrisch angesteuerte Flüssigkeitsreibungskupplung ein Akkumulator bzw. Speicherkörper mit einer Auffangkammer vorgeschlagen, welcher radial zwischen Vorratskammer und Arbeitskammer der Flüssigkeitsreibungskupplung angeordnet ist. Bei Stillstand der Kupplung wird das Öl, welches von der Vorraskammer aufgrund der Schwerkraft nach unten fließt, in der Auffangkammer des Speicherkörpers gesammelt und am Eintritt in die Arbeitskammer gehindert. Dadurch soll - unabhängig von der Winkelposition des Akkumulators - ein besseres Kaltstartverhalten erzielt werden.

Durch die DE 197 53 725 C2 der Anmelderin wurde eine elektrisch angesteuerte Flüssigkeitsreibungskupplung zum Antrieb eines Lüfters für ein Kraftfahrzeug bekannt. Die bekannte Kupplung weist eine von einer Brennkraftmaschine des Kraftfahrzeuges angetriebene Antriebsscheibe auf, welche in einem Kupplungsgehäuse gelagert ist, an welchem ein Lüfter befestigt wird. In der Antriebsscheibe ist eine ringförmige Vorratskammer angeordnet, welche durch eine Zwischenscheibe nach außen abgeschlossen wird und eine durch einen Ventilhebel kontrollierbare Ventilöffnung aufweist. Der Ventilhebel wird mittels einer Ankerscheibe von einer Elektromagnetspule betätigt. In stromlosem Zustand hebt der Ventilhebel von der Ventilöffnung ab, sodass Öl aus der Vorratskammer in die radial außen liegende Arbeitskammer strömen kann. Aus der Arbeitskammer wird das Öl über eine Rücklaufeinrichtung in die Vorratskammer zurückgeführt. Die Kupplung weist somit eine Einrichtung zum Zuführen und zum Rückführen von Öl auf. Wie bereits oben ausgeführt, besteht auch bei dieser Kupplung der Nachteil, dass bei Stillstand der Kupplung Öl aus der Vorratskammer in die Arbeitskammer fließen und somit bei Neustart der Kupplung ein unerwünschtes Hochlaufen des Lüfters erfolgen kann.

Ausgehend von diesem Stand der Technik, ist es Aufgabe der vorliegenden Erfindung, das Kaltstartverhalten bei Flüssigkeitsreibungskupplungen der eingangs genannten Art zu verbessern.

Diese Aufgabe wird durch die Merkmale des Patentanspruches 1 gelöst. Erfindungsgemäß ist vorgesehen, dass ein Teil der ringförmig ausgebildeten Vorratskammer als Speicherkammer für die Scherflüssigkeit (Silikonöl) ausgebildet ist. Damit wird der Vorteil erreicht, dass ein hinreichender Teil der Scherflüssigkeit - etwa 40 % des Gesamtvolumens der Vorratskammer - bei Stillstand der Kupplung zurückgehalten und somit das Kaltstartverhalten der Flüssigkeitsreibungskupplung verbessert wird.

Vorzugsweise ist die Vorratskammer - und die Speicherkammer - in der Antriebsscheibe der Flüssigkeitsreibungskupplung angeordnet. Dadurch ist der Öldruck in der Vorratskammer direkt von der Drehzahl der Brennkraftmaschine abhängig; ebenso entspricht die Drehwinkelposition der Vorratskammer der Drehwinkelposition der Kurbelwelle der Brennkraftmaschine.

Nach einer bevorzugten Ausführungsform ist die Speicherkammer als ringförmiger Abschnitt oder Ringsektor ausgebildet, der sich etwa über einen Viertelkreis, d. h. 90 bis 100 Grad Umfangswinkel erstreckt, wobei ein Ende des Ringabschnittes geschlossen, d. h. als Boden ausgebildet und das andere Ende offen ist, sodass von dort Öl zuströmen und sich in der Speicherkammer je nach Winkelposition der Vorratskammer sammeln kann. Die Speicherkammer kann als Zusatzbehälter ausgebildet sein, welcher in die Vorratskammer eingesetzt wird. Daraus resultiert der Vorteil, dass eine derartige Speicherkammer bei bestehenden, serienmäßigen Flüssigkeitsreibungskupplungen nachgerüstet werden kann. Somit sind keine Konstruktionsänderungen notwendig, d. h. eine solche Lösung ist besonders kostengünstig.

Nach einer bevorzugten Ausführungsform ist die Vorratskammer mit einer Zulauf- und einer Rücklaufbohrung im Bereich ihres äußeren Durchmessers verbunden. Beide Bohrungen bilden miteinander etwa einen Umfangswinkel von bis zu 30 Grad und sind in dem Bereich der Vorratskammer, der an den Boden der Speicherkammer angrenzt, angeordnet. Mit der erfindungsgemäßen Speicherkammer bzw. dem zusätzlichen Speicherbehälter in Verbindung mit Zu- und Rücklaufbohrung können - unabhängig von der Drehwinkelposition der Vorratskammer - etwa 30 bis 40 % des Vorratskammervolumens gespeichert werden.

Nach einer weiteren bevorzugten Ausführungsform ist die ringförmige Vorratskammer in axialer Richtung in eine vordere und eine hintere Kammer unterteilt, und zwar vorzugsweise durch eine sich in radialer Richtung erstreckende Zwischenwand. Die vordere Kammer ist durch eine Abdeckscheibe öldicht abgeschlossen, und die hintere Kammer kommuniziert mit der vorderen über eine Durchtrittsöffnung, welche vorzugsweise in der Zwischenwand angeordnet ist. Die hintere Kammer kommuniziert mit mindestens einer Zulaufbohrung und mindestens einer Rücklaufbohrung, wobei die Durchtrittsöffnung in der Zwischenwand etwa diametral zu den benachbart zueinander angeordneten Zu- und Rücklaufbohrungen angeordnet ist. Durch die Unterteilung der Vorratskammer wird eine Speicherkammer bzw. ein Speichervolumen geschaffen, in welchem mindestens 50 % des Ölvolumens zurückgehalten werden können. Hierfür sollte das Volumen der vorderen Kammer mindestens 50 % des Gesamtvolumens der Vorratskammer betragen. Somit können bei ungünstiger Drehwinkellage der Vorratskammer (Bohrungen unten, d. h. in 6-Uhr-Position) knapp 50 % des Ölvolumens bei Stillstand der Kupplung in die Arbeitskammer gelangen. Bei einem Wiederanlaufen der Kupplung läuft diese zwar zunächst auf eine erhöhte Drehzahl hoch, jedoch wird die geringere Ölmenge in kürzerer Zeit wieder aus der Arbeitskammer in die Vorratskammer zurückgefördert, sodass die Drehzahl sofort wieder absinkt und das Kaltstartverhalten insgesamt verbessert wird.

Die erfindungsgemäßen Maßnahmen in Form eines Speichervolumens in der Vorratskammer wirken sich insbesondere bei elektromagnetisch angesteuerten Kupplungen vorteilhaft aus, da das Ventil im Vorratsraum bei Stillstand der Kupplung und stromloser Magnetspule geöffnet ist.

Ausführungsbeispiele der Erfindung sind in der Zeichnung dargestellt und werden im Folgenden näher erläutert. Es zeigen
- Fig. 1-4: ein erstes Ausführungsbeispiel der Erfindung in Form einer ringförmigen Vorratskammer mit einer in Umfangsrichtung abgeteilten Speicherkammer in verschiedenen Winkelpositionen,
- Fig. 5: ein zweites Ausführungsbeispiel der Erfindung in Form einer Flüssigkeitsreibungskupplung mit axial unterteilter ringförmiger Vorratskammer,
- Fig. 6: die Flüssigkeitsreibungskupplung gemäß Fig. 5 in einem Axialschnitt und
- Fig. 7: ein Drehzahldiagramm für das Kaltstartverhalten einer bekannten und einer erfindungsgemäßen Kupplung.

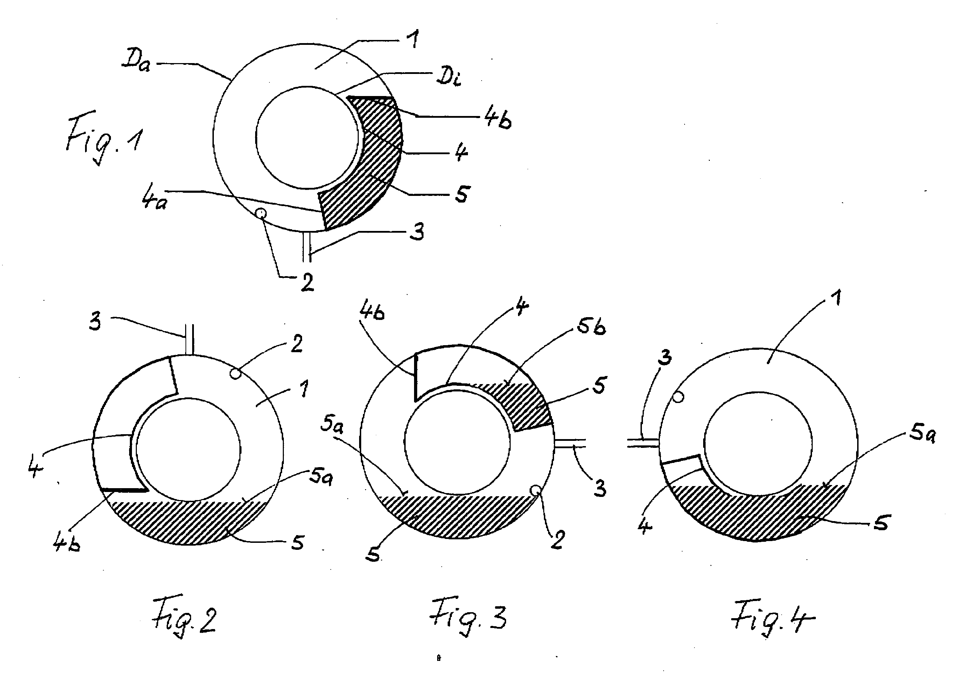

**Fig. 1** zeigt in schematischer Darstellung eine ringförmig ausgebildete Vorratskammer 1 einer nicht dargestellten Flüssigkeitsreibungskupplung, welche dem eingangs genannten Stand der Technik entsprechen kann. Die ringförmig ausgebildete Vorratskammer 1 ist in einer nicht dargestellten Antriebsscheibe, auch Primärscheibe genannt, der nicht dargestellten Flüssigkeitsreibungskupplung angeordnet, wird somit mit der Antriebsdrehzahl der Brennkraftmaschine angetrieben, d. h. ohne Schlupf. Die Vorratskammer 1 weist einen äußeren Durchmesser Dₐ und einen inneren Durchmesser D, auf. Im Bereich des äußeren Durchmesser Dₐ sind eine Zulaufbohrung 2 und eine Rücklaufbohrung 3 angeordnet, die Teil einer nicht weiter dargestellten Einrichtung zur Zuführung von in der Vorratskammer befindlichem Silikonöl zu einer nicht dargestellten Arbeitskammer der Flüssigkeitsreibungskupplung und einer entsprechenden Einrichtung zur Rückführung des Silikonöls aus der Arbeitskammer in die Vorratskammer 1 gehören. Im dargestellten Ausführungsbeispiel befindet sich die Rücklaufbohrung 3 in einer unteren Position, der so genannten 6-Uhr-Position. Die Zulaufbohrung 2 ist in unmittelbarer Nähe der Rücklaufbohrung 3, d. h. in einem Winkelabstand von ca. 30 Grad angeordnet. In der ringförmigen Vorratskammer 1 ist eine ringsektorförmige, schraffiert dargestellte Speicherkammer in Form eines Behälters 4 (Speicherbehälter) angeordnet, welcher mit Silikonöl 5, dargestellt durch die Schraffur, gefüllt ist. Der Behälter 4 wirkt als Speicherkammer und nimmt in der dargestellten Stillstandsposition die gesamte in der Vorratskammer 1 befindliche Ölmenge auf. Der Behälter 4 weist einen geschlossenen Boden 4a und ein offenes Stirnende 4b auf, durch welches Öl ein- und austreten kann. Der Behälter 4, der als Zusatzbehälter in die ringförmige Vorratskammer 1 eingesetzt werden kann, bildet ein in Umfangsrichtung von der Vorratskammer 1 abgeteiltes Speichervolumen, welches sich etwa über einen Umfangswinkel α von ca. 90 - 120° erstreckt, also mindestens einen Viertelkreissektor bildet.

**Fig. 2** zeigt eine andere Drehwinkelposition der Vorratskammer 1 mit völlig geleertem Speicherbehälter 4: die Rücklaufbohrung 3 befindet sich in ihrer obersten Position, in der so genannten 12-Uhr-Position, d. h. um 180° versetzt gegenüber der Position gemäß Fig. 1. Die gesamte Ölmenge, dargestellt durch die Schraffur 5, befindet sich hier im unteren Abschnitt (Mulde) der Vorratskammer 1, wobei der Ölspiegel 5a den Innendurchmesser Dᵢ der Vorratskammer 1 tangiert (bei höherem Ölspiegel 5a läuft das Öl über die zentrale Öffnung mit dem Innendurchmesser D, aus der Vorratskammer 1).

**Fig. 3** zeigt eine weitere Drehwinkelposition der Vorratskammer 1 mit Speicherbehälter 4, wobei sich die Rücklaufbohrung 3 in einer rechten horizontalen Position, der so genannten 3-Uhr-Position, befindet. Die Speicherkammer 4 befindet sich in einer oberen Position, wobei ein Teil der Ölmenge über den offenen Stimquerschnitt 4b ausgelaufen und ein restlicher Teil der Ölmenge mit einem oberen Ölspiegel 5b in der Speicherkammer 4 zurückgehalten wird. Das ausgelaufene Öl befindet sich im unteren Abschnitt (Mulde) der Vorratskammer 1 und bildet einen unteren Ölspiegel 5a. Die Zulaufbohrung 2 befindet sich hier unmittelbar oberhalb des Ölspiegels 5a.

**Fig. 4** zeigt eine weitere Drehwinkelposition der Vorratskammer 1, wobei die Rücklaufbohrung 3 sich in einer linken horizontalen Position, der 9-Uhr-Position, befindet. Die Speicherkammer 4 befindet sich in einer unteren Position und nimmt einen großen Teil der Gesamtölmenge auf - der Ölspiegel, der sich hier einstellt, ist wiederum mit 5a gekennzeichnet.

Die bei Stillstand der Kupplung zurückgehaltene Ölmenge in den Figuren 1 bis 4 bzw. in den Positionen 6-Uhr, 12-Uhr, 3-Uhr, 9-Uhr ist ungefähr die gleiche - sie entspricht etwa 30 bis 40 % des Volumens der Vorratskammer 1.

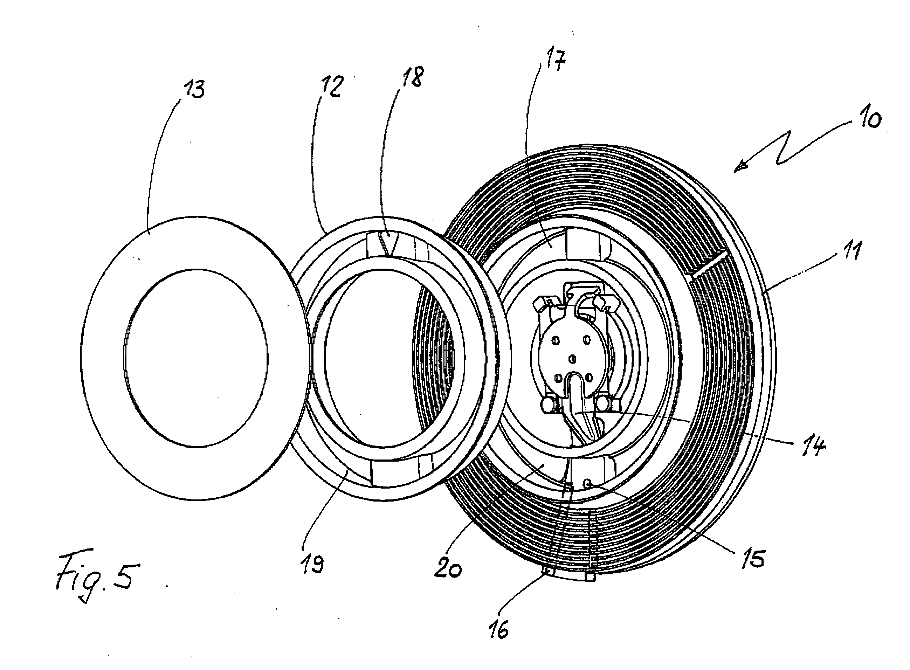

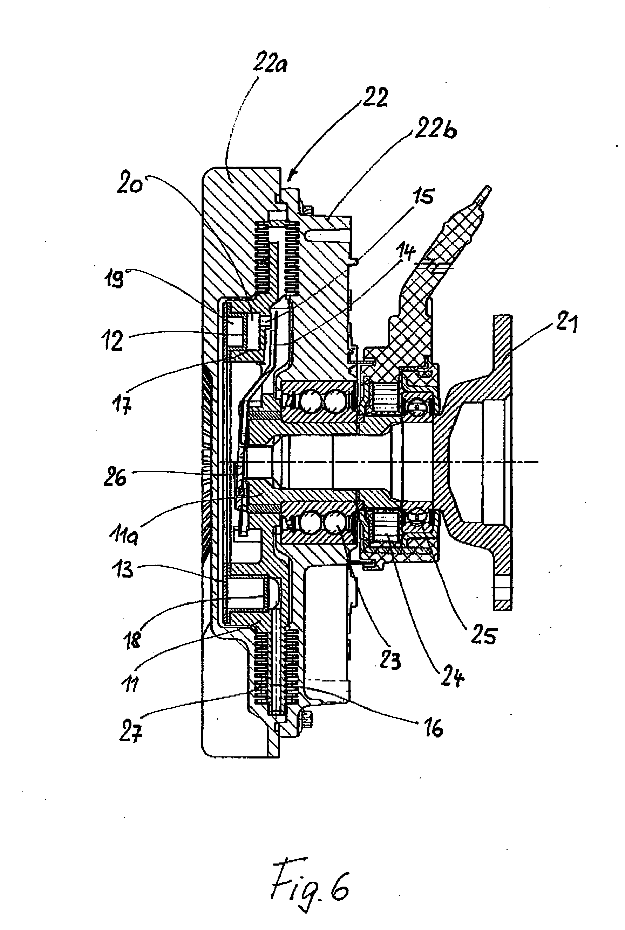

**Fig. 5** zeigt ein zweites Ausführungsbeispiel der Erfindung, nämlich eine primärseitige Baugruppe 10 einer in Fig. 6 vollständig dargestellten Flüssigkeitsreibungskupplung. Die Baugruppe 10 umfasst eine Antriebsscheibe 11, auch Primärscheibe genannt, eine Zwischenwand 12 und eine Abdeckscheibe 13. An der Primärscheibe 11 ist ein Ventilhebel 14 kippbar befestigt, welcher eine Zulaufbohrung 15 kontrolliert. Eine Rücklaufbohrung 16 ist im angrenzenden Bereich der Zulaufbohrung 15, d. h. um etwa 30 Grad auf dem Umfang versetzt, angeordnet. In der Primärscheibe 11 ist ferner eine ringförmig ausgebildete Vorratskammer 17 angeordnet, in welche die Zulaufbohrung 15 und die Rücklaufbohrung 16 münden. Die Zwischenwand 12, welche einen der ringförmigen Vorratskammer 17 entsprechenden, topfförmigen Querschnitt aufweist, weist in ihrem oberen, d. h. diametral zu der Zulaufbohrung 15 angeordneten Bereich eine Durchtrittsöffnung 18 auf. Die Zwischenscheibe 12 wird in die ringförmige Vorratskammer 17 eingesetzt und unter teilt diese in eine vordere Kammer 19 und eine hintere Kammer 20. Die Abdeckscheibe 13 verschließt die vordere Kammer 19.

**Fig. 6** zeigt - in einem Axialschnitt - die vollständige Flüssigkeitsreibungskupplung, in welche die primärseitige Baugruppe 10 gemäß Fig. 5 eingebaut ist; für gleiche Teile werden gleiche Bezugszeichen verwendet. Die Primärscheibe 11 weist eine Nabe 11a auf, welche drehfest auf einer Antriebswelle 21, vorzugsweise der Kurbelwelle der nicht dargestellten Brennkraftmaschine befestigt ist. Ein Kupplungsgehäuse 22, bestehend aus zwei Gehäusehälften 22a, 22b, ist auf der Nabe 11a der Primärscheibe 11 bzw. auf der Antriebswelle 21 über ein Wälzlager 23 gelagert. Eine Magnetspule 24 ist stationär neben der hinteren Gehäusehälfte 22b angeordnet und über ein Lager 25 gegenüber der Antriebswelle 21 abgestützt. Der Ventilhebel 14, welcher kippbar an der Stirnseite der Antriebswelle 21 bzw. der Nabe 11a angeordnet ist, weist eine Ankerplatte 26 auf, welche bei Strombeaufschlagung der Magnetspule 24 angezogen wird, sodass der Ventilhebel 14 die Zulaufbohrung 15 verschließt. In der dargestellten Position ist die Zulaufbohrung 15 offen, d. h. der Ventilhebel 14 ist von der Zulaufbohrung 15 abgehoben, die Magnetspule 24 ist stromlos. Diese Stellung entspricht der fail-safe-Position, d. h. bei Stromausfall muss die Kupplung zugeschaltet sein, um eine Kühlwirkung für den Motor aufrechtzuerhalten. Einzelheiten über die elektromagnetische Betätigung des Ventilhebels 14 durch die Magnetspule 24 gehen grundsätzlich aus der eingangs genannten DE 197 53 725 C2 hervor, auf die hiermit verwiesen wird. Die ringförmige Vorratskammer 17 ist, wie der obere Teil des Axialschnittes in Fig. 6 zeigt, in eine vordere Kammer 19 und eine hintere Kammer 20 unterteilt, wobei die Zwischenwand 12 eine Trennwand und die vordere Kammer 19 ein Speichervolumen bildet. Die Zulaufbohrung 15 ist in der oberen Hälfte dargestellt, die Rücklaufbohrung 16 ist versetzt in der unteren Hälfte des Axialschnittes dargestellt - dies entspricht somit nicht der tatsächlichen Position, die vielmehr aus Fig. 5 hervorgeht. Diametral gegenüberliegend zur Zulaufbohrung 15 ist die Durchtrittsöffnung 18 angeordnet. Die Primärscheibe 11 bildet mit dem Kupplungsgehäuse 22 eine Arbeitskammer 27, welche in bekannter Weise aus ineinander greifenden Ringstegen und Ringnuten besteht, welche miteinander Ringspalte bilden, die mit einer Scherflüssigkeit, vorzugsweise Silikonöl gefüllt werden. Das Öl wird der Arbeitskammer 27 über die Zulaufbohrung 15 zugeführt und über einen nicht dargestellten Pumpmechanismus über die Rücklaufbohrung 16 zurückgefördert. Die Zulaufbohrung 15 und die Rücklaufbohrung 16 stehen beide mit der hinteren Kammer 20 in Verbindung. Am Gehäuse 22, der Abtriebsseite der Kupplung, ist ein nicht dargestellter Lüfter zur Kühlung der Brennkraftmaschine befestigt.

Die Arbeitsweise der Kupplung ist die Folgende: Wie bereits erwähnt, zeigt die Zeichnung (Fig. 6) die Kupplung im zugeschalteten Zustand, d. h. die Magnetspule 24 ist stromlos, und die Zulaufbohrung 15 ist geöffnet. Bei angetriebener Kupplung strömt Öl aus der hinteren Kammer 20 in die Arbeitskammer 27. Gleichzeitig kann Öl aus der vorderen Kammer 19 über die Durchtrittsöffnung 18 nachströmen. Aus der Arbeitskammer 27 wird das Öl kontinuierlich über die Rücklaufbohrung 16 in den Vorratsraum, d. h. die hintere Kammer 20 zurückgefördert. Es findet eine Ölzirkulation zwischen Vorratskammer und Arbeitskammer statt. Soll die Kupplung, z. B. Erreichen einer niedrigen Kühlmitteltemperatur abgeschaltet werden, wird die Magnetspule 24 bestromt, der Ventilhebel 14 wird über die Ankerplatte 26 angezogen und verschließt die Zulaufbohrung 15. Das noch in der Arbeitskammer 27 befindliche Öl wird vollständig über die Rücklaufbohrung 16 abgepumpt und zunächst in die hintere Kammer 20 und dann in die vordere Kammer 19 gefördert. Wird der Motor des Kraftfahrzeuges abgeschaltet, wird auch die Magnetspule 24 stromlos, und der Ventilhebel 14 fällt ab, sodass die Zulaufbohrung 15 geöffnet ist. Je nach Drehwinkelstellung der Primärscheibe 11 und der Bohrungen 15, 16 kann dann Öl aus der hinteren Kammer 20 in die Arbeitskammer 27 übertreten. Insbesondere tritt dieser Fall dann ein, wenn sich die Zulaufbohrung 15 und/oder die Rücklaufbohrung 16 in einer unten liegenden, d. h. der 6-Uhr-Posftion befinden. Erfindungsgemäß läuft dann jedoch nicht die gesamte Vorratskammer 17 leer, sondern nur die Ölmenge, die sich in der hinteren Kammer 20 befindet, kann in die Arbeitskammer 27 übertreten. Die Ausgleichsöffnung 18 befindet sich bei 6-Uhr-Position der Zulaufbohrung 15 in der 12-Uhr-Position, d. h. oben. Somit kann aus der vorderen Kammer 19, der Speicherkammer, kein Öl nachströmen, vielmehr wird die in der vorderen Kammer 19 befindliche Ölmenge zurückgehalten. Je nach Aufteilung der beiden Kammern 19, 20 beträgt die zurückgehaltene Ölmenge in der vorderen Kammer 19 etwa 50 % der gesamten Ölmenge oder auch mehr. In diesem ungünstigsten Fall befindet sich somit beim Anlassen des Motors nach einer längeren Pause nur eine relativ geringe Ölmenge, weniger als 50 % der gesamten Ölmenge in der Arbeitskammer 27. Die Kupplung läuft dann zwar beim Start des Motors kurzzeitig auf eine erhöhte Drehzahl hoch, jedoch wird das in der Arbeitskammer 27 befindliche Öl bei geschlossener Zulaufbohrung 15 relativ schnell in die hintere Kammer 20 zurückgepumpt. Damit fällt die Abtriebsdrehzahl der Kupplung wieder auf die Leerlaufdrehzahl.

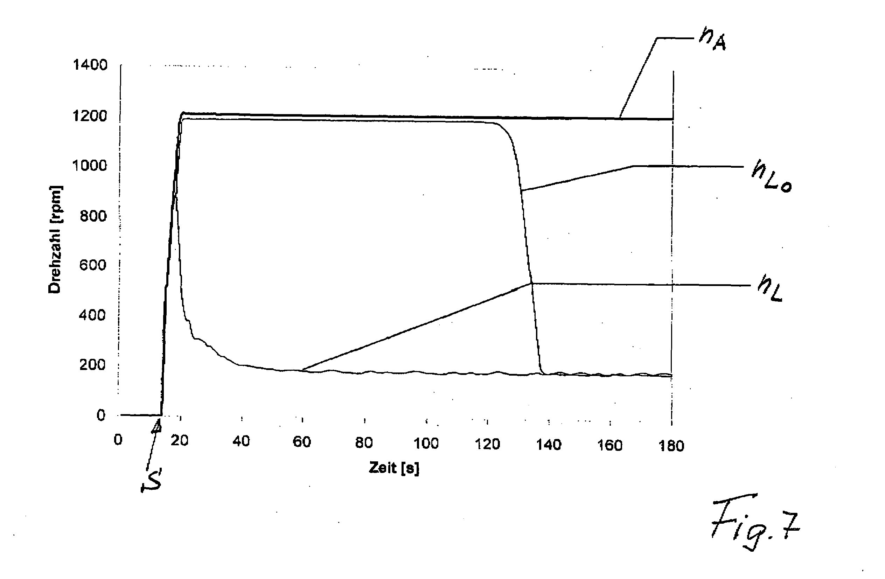

**Fig. 7** zeigt die Abhängigkeit von verschiedenen Drehzahlen über der Zeit, nämlich die Antriebsdrehzahl n_{A}, die Lüfterdrehzahl n_{L0} nach dem Stand der Technik und die Lüfterdrehzahl n_{L} bei erfindungsgemäßer Ölspeicherung im Vorratsraum. Beim Start des Motors, gekennzeichnet durch einen Pfeil S auf der Zeitachse, läuft die Antriebsdrehzahl n_{A} steil nach oben und verharrt auf einem Niveau von etwa 1200 Umdrehungen/Min. Dabei handelt es sich um die Drehzahl, ab der der Lüfter, insbesondere von schweren LKW in der Kabine deutlich hörbar wird und so, insbesondere zu einer Geräuschbelästigung führt. Die Leerlaufdrehzahl ist niedriger als 1200 U/min. Die Lüfterdrehzahl n_{L0} läuft zunächst mit der Antriebsdrehzahl n_{A} hoch, und zwar auf fast das gleiche Drehzahlniveau (Drehzahlunterschied entspricht dem Schlupf der Kupplung). Nach ca. 100 Sekunden, d. h. bei etwa 120 Sekunden auf der Zeitachse fällt die Drehzahl n_{L0} auf ca. 200 Umdrehungen/Min. ab, da die Arbeitskammer 27 erst nach dieser Zeitspanne entleert worden ist. Bei der erfindungsgemäßen Kupplung mit Ölspeicherung in der Vorratskammer dagegen steigt die Drehzahl n_{L} nur kurzfristig auf einen Wert von etwa 900 Umdrehungen/Min. an, um unmittelbar nach Erreichen dieses Spitzenwertes wieder auf eine Leerlaufdrehzahl von etwa 200 Umdrehungen/Min. abzufallen. Der Unterschied gegenüber der Kupplung nach dem Stand der Technik ist sehr deutlich, d. h. das Kaltstartverhalten der erfindungsgemäßen Kupplung ist deutlich verbessert: damit werden eine unerwünschte Geräuschentwicklung und ein unnötiger Energieverbrauch vermieden. Die dargestellten Kurven der Drehzahlen beruhen auf Messungen, die von der Anmelderin durchgeführt wurden.

## Patentansprüche

1. Flüssigkeitsreibungskupplung für den Antrieb eines Lüfters in einem Kraftfahrzeug, wobei die Flüssigkeitsreibungskupplung eine Antriebsscheibe (11) und ein Gehäuse (22), eine Vorratskammer (1, 17) und eine Arbeitskammer (27), eine Einrichtung (2, 15) für die Zuführung von Scherflüssigkeit aus der Vorratskammer (1, 17) in die Arbeitskammer (27) und eine Einrichtung (3, 16) für die Rückführung der Scherflüssigkeit aus der Arbeitskammer (27) in die Vorratskammer (1, 17) aufweist, **dadurch gekennzeichnet, dass** die Vorratskammer (1, 17) ringförmig und ein Teil der Vorratskammer (1, 17) als Speicherkammer (4, 19) für die Scherflüssigkeit ausgebildet ist.

2. Flüssigkeitsreibungskupplung nach Anspruch 1, **dadurch gekennzeichnet, dass** die Vorratskammer (1, 17) in der Antriebsscheibe (11) angeordnet ist.

3. Flüssigkeitsreibungskupplung nach Anspruch 3, **dadurch gekennzeichnet, dass** die Speicherkammer als ringförmiger Abschnitt (4) ausgebildet ist, der sich über einen Umfangswinkel α erstreckt, wobei α > 90°, vorzugsweise ≥ 100° ist.

4. Flüssigkeitsreibungskupplung nach Anspruch 3, **dadurch gekennzeichnet, dass** der ringförmige Abschnitt als Zusatzbehälter (4) ausgebildet ist.

5. Flüssigkeitsreibungskupplung nach Anspruch 3 oder 4, **dadurch gekennzeichnet, dass** die Vorratskammer (1) mindestens eine Zulaufbohrung (2) und mindestens eine Rücklaufbohrung (3) aufweist, die Teil der Einrichtungen für die Zuführung und die Rückführung der Scherflüssigkeit sind.

6. Flüssigkeitsreibungskupplung nach Anspruch 5, **dadurch gekennzeichnet, dass** die Zu- und Rücklaufbohrungen (2, 3) außerhalb der Speicherkammer (4) und im Bereich des äußeren Durchmesser (Dₐ) der Vorratskammer (1) angeordnet sind.

7. Flüssigkeitsreibungskupplung nach Anspruch 1 oder 2, **dadurch gekennzeichnet, dass** die Vorratskammer (17) in axialer Richtung in eine vordere und eine hintere Kammer (19, 20) unterteilt ist.

8. Flüssigkeitsreibungskupplung nach Anspruch 7, **dadurch gekennzeichnet, dass** die vordere und die hintere Kammer (19, 20) durch eine Zwischenwand (12) unterteilt sind.

9. Flüssigkeitsreibungskupplung nach Anspruch 7 oder 8, **dadurch gekennzeichnet, dass** die vordere Kammer (19) durch eine Abdeckscheibe (13) abgeschlossen ist.

10. Flüssigkeitsreibungskupplung nach Anspruch 7, 8 oder 9, **dadurch gekennzeichnet, dass** die vordere und die hintere Kammer (19, 20) miteinander kommunizieren.

11. Flüssigkeitsreibungskupplung nach Anspruch 10, **dadurch gekennzeichnet, dass** in der Zwischenwand (12) mindestens eine Durchtrittsöffnung (18) angeordnet ist, über welche die Kammern (19, 20) kommunizieren.

12. Flüssigkeitsreibungskupplung nach einem der Ansprüche 7 bis 12, **dadurch gekennzeichnet, dass** die hintere Kammer (20) mit den Einrichtungen für die Zu- und Rückführung der Scherflüssigkeit (15, 16) kommuniziert.

13. Flüssigkeitsreibungskupplung nach Anspruch 12, **dadurch gekennzeichnet, dass** im Bereich der hinteren Kammer (20) mindestens eine Zulaufbohrung (15) angeordnet ist.

14. Flüssigkeitsreibungskupplung nach Anspruch 12 oder 13, **dadurch gekennzeichnet, dass** im Bereich der hinteren Kammer (20) mindestens eine Rücklaufbohrung (16) angeordnet ist.

15. Flüssigkeitsreibungskupplung nach Anspruch 12, 13 oder 14, **dadurch gekennzeichnet, dass** die mindestens eine Durchtrittsöffnung (18) im Wesentlichen diametral zur Zu- und/oder Rücklaufbohrung (15, 16) angeordnet ist.

16. Flüssigkeitsreibungskupplung nach einem der Ansprüche 1 bis 15, **dadurch gekennzeichnet, dass** die Einrichtung (14, 15) für die Zufuhr von Scherflüssigkeit elektromagnetisch (24, 26) steuerbar ist.
